# EUROPEAN PATENT SPECIFICATION

(11) **EP 2 956 723 B1**
(45) Date of publication and mention of the grant of the patent: **26.06.2019**
(21) Application number: 14751206.5
(22) Date of filing: 18.02.2014
(51) Int. Cl.: F24D 15/04, F24D 19/00, F24F 12/00, F24D 3/08, F24D 3/18, F24D 5/12

(54) **ENERGY SYSTEM FOR DWELLINGS**
ENERGIESYSTEM FÜR WOHNUNGEN
SYSTÈME D'ÉNERGIE POUR HABITATIONS

(30) Priority: 18.02.2013 NO 20130270
(43) Date of publication of application: 23.12.2015
(73) Proprietor: Selvaag Gruppen AS, 0512 Oslo (NO)
(72) Inventor: THORSNES, Ola Øystein, NO- 0871 Oslo (NO)
(74) Representative: Oslo Patentkontor AS
(86) International application number: PCT/NO2014/000018
(87) International publication number: WO 2014/126475

(56) References cited:
- EP-A2- 2 431 673
- WO-A1-00/31474
- DE-A1- 3 326 498
- DE-A1- 3 326 498
- DE-A1- 19 614 913
- DE-A1- 19 614 913
- GB-A- 2 374 921
- GB-A- 2 374 921

## Description

The present invention relates to an energy system for ventilating and heating dwellings by means of an exhaust heat pump.

Such a system is known from DE 19614913 A1, wherein an air to water exhaust heat pump draws used air in through adjustable valves in so-called dirty rooms such as bathrooms or kitchens. Fresh air is drawn in through valves high up on the outer wall of clean rooms, such as bedrooms and living rooms, where it is heated by radiators receiving hot water from the heat pump via a furnace. The radiators are shown located far from the outer wall, and nothing is said about how the air circulates between the clean and dirty rooms. The location of the air inlet high up on the outer wall will lead to a cold draft in parts of the room before the fresh air is tempered by mixing with air warmed by the radiator. The warm air from the radiator must therefore have a substantially higher temperature than the desired room temperature, which in turn requires a correspondingly high temperature on the water to the radiator. As a result, it becomes necessary to have a furnace in order to further heat the water from the heat pump before it is supplied to the radiators.

The present invention aims at providing a complete energy system with an exhaust heat pump and also comprising a ventilation system and a hot water supply to taps and radiators. It is desired to avoid cold draft from inflowing air and high temperatures on the radiators, while concurrently obtaining a ventilation system practically without ducting. This is obtained according to the invention with an energy system as defined in claim 1.

For better understanding of the invention it will be described more closely with reference to the appended drawings, where:
Figure 1 is a schematic vertical section through a dwelling provided with an exemplary system according to the invention, and
Figure 2 is a schematic showing examples of the main elements in the system according to the invention.

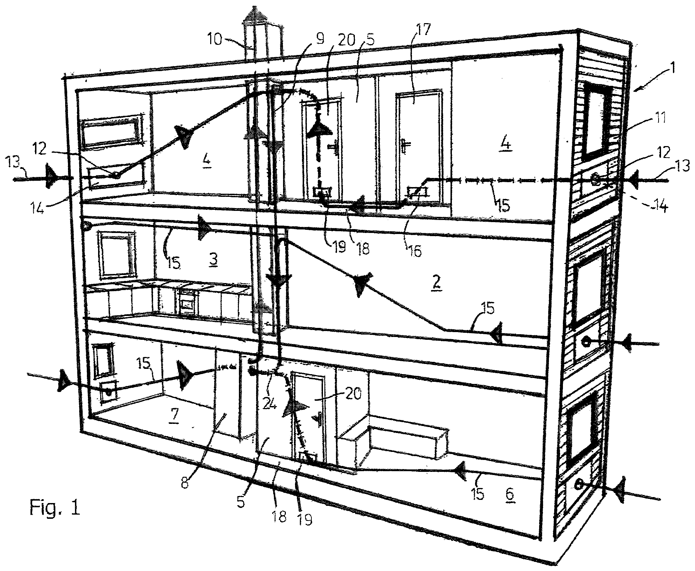

The dwelling 1 in Figure 1 has different rooms such as a living room 2, a kitchen 3, bedrooms 4, bathrooms 5, a bedsit 6 and a recreation room 7.

An exhaust heat pump 8 is placed in the recreation room, the heat pump being provided with warm used air from the various rooms via a used air duct 9. Cooled used air from the heat pump is led out above the roof through a discharge duct 10.

In the outer wall 11 of the clean rooms, an inlet opening 12 for cold fresh air is indicated by the arrows 13. On the inside of the wall 11, in front of the opening 12 a radiator 14 is placed, by which the cold fresh air 13 has to pass and become pre-heated on its way into the room. This pre-heated fresh air is indicated by arrows 15.

Up on the right in Figure 1, it is shown how the fresh air heated in the bedroom 4 flows through an opening 16 in the bedroom door 17 and further via the corridor 18 into the bathroom 5 through an opening 19 in the bathroom door 20. In a similar manner, warmed air to the bathroom 5 in the basement floor is supplied from the bedsit 6 via the corridor 18 and in through the opening 19 in the bathroom door. Used air from the bathrooms passes into the used air duct 9.

In the kitchen 3, the warmed fresh air 15 is taken from a neighboring room, e.g. from the bedroom 4 on the floor above. The kitchen may also have its own radiator with fresh air supplied directly from outside.

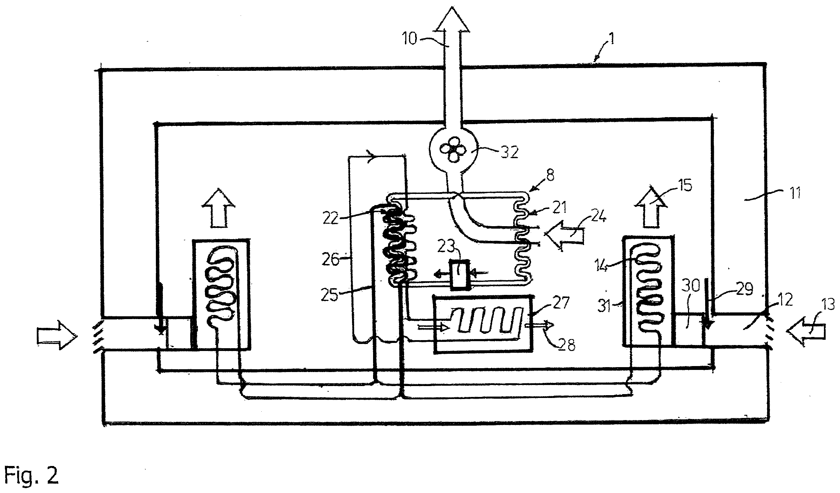

The principal drawing in Figure 2 shows schematically the exhaust heat pump 8 having a cold side 21 and a warm side 22, and a compressor 23 therebetween. An exhaust fan 32 causes warm used air 24 to flow in on the cold side and give off heat before being blown out through the discharge duct 10. Two pipe coils run through the warm side 22, one of the coils 25 circulating warm water to the radiators 14, and the other coil 26 circulating warm water for heating the water in a water heater 27 for warm tap water 28.

The fresh air 13 which flows in through the opening 12 in the wall 11, passes an adjustable valve 29 and a filter 30 on its way into a housing 31, the housing partly surrounding the radiator element 14 and forcing the air to flow past it before leaving the housing as warmed fresh air 15.

The heat pump 8 may be continuously adjustable, e.g. of the type F750 from the producer Nibe in Sweden, such that it may also run during the summer for i.a. providing heat to the pipe coil 26 and thereby the water heater 27. Nevertheless, the system according to the invention has a high capacity since the compressor 23 of the heat pump may have a rating of 6 kW and pull the exhaust air down to -15 °C. In the summer, this cooled exhaust air may be used for cooling the indoor air via a separate heat exchanger (not shown).

Since all the fresh air admitted to the dwelling must pass the radiators, they may be held at a lower temperature than if the air from these had to mix with cold inflowing outside air in order to avoid cold draft. Therefore also the temperature of the water to the radiators may be held at a lower level, which in turn provides for optimalization of the efficiency of the heat pump. Moreover, the radiators will be provided with customary equipment for temperature control and possible shutting off.

It will be understood that the energy system according to the invention provides a combination giving a draft free, effective and cost efficient ventilation and heating solution which does not require complicated supply and exhaust ducting occupying space in ceilings and technical rooms, but which utilizes the dwelling itself as distributor of the pre-heated air through rooms and corridors on its way to the exhaust heat pump which extracts the energy from the air. This energy is recirculated as warm water to the radiators and the water heater, and in this manner the energy in both the incoming air and the energy which is produced by people, lighting and appliances are utilized in an efficient manner.

It will be understood that the invention is not restricted to the exemplifying embodiment described above, but may be varied and modified by the skilled person within the scope of the following claims.

## Claims

1. A complete energy system for ventilating and heating of dwellings (1), comprising an air to water exhaust heat pump (8) drawing fresh air (13) in through openings (12) in an outer wall (11) in clean occupancy rooms such as living room (2) and bedroom (4), and out through dirty rooms such as bathroom (5) and kitchen (3) as warm used air (24) on the way to the heat pump (8),
wherein the heat pump (8) supplies warm water at least to radiators (14) located in said clean rooms (2, 4, 6, 7) and supplies cooled used air to a discharge (10), **characterized in that** apertures (16, 19) are arranged to permit heated air (15) from clean rooms to circulate via corridors (18) or other rooms to dirty rooms (3,5),
that said radiators (14) are placed in front of said openings (12) being located in the outer wall (11) near the floor so that the fresh air (13) has to pass at least a portion of the radiators (14), and
that the heat pump (8) supplies warm water (26) for heating of the water (28) in a hot tap water heater (27).

2. An energy system according to claim 1,
wherein a filter (30) is located between the opening (12) in the outer wall (11) and the radiator (14).

3. An energy system according to claim 1 or 2,
wherein an adjustable valve (29) is arranged between the opening (12) in the outer wall (11) and the radiator (14).

4. An energy system according to one of claims 1 - 3,
wherein said apertures comprise openings (16, 19) or slots in or along doors (17, 20) to rooms (4, 5) in the dwelling (1).

5. An energy system according to one of the preceding claims,
wherein the heat pump (8) has a compressor (23) with a size in the order of 6 kW.

6. An energy system according to one of the preceding claims,
wherein the heat pump (8) is arranged to cool the used air down to -15 °C.

7. An energy system according to one of the preceding claims,
wherein the heat pump (8) is arranged to supply heat to the hot tap water heater (27) also in the summer.

8. An energy system according to one of the preceding claims,
wherein the heat pump comprises two pipe coils (25, 26), one of the coils (25) circulating warm water to the radiators (14), the other coil (26) circulating warm water for heating the water in the water heater (27) for warm tap water (28).

## Patentansprüche

1. Vollständiges Energiesystem zum Belüften und Heizen von Wohnungen (1), umfassend eine Luft-Wasser-Abluftwärmepumpe (8), die Frischluft (13) durch Öffnungen (12) in einer Außenwand (11) in saubere Zimmer, wie ein Wohnzimmer (2) und Schlafzimmer (4) ansaugt und durch schmutzige Zimmer, wie Badezimmer (5) und Küche (3) als warme Abluft (24) auf dem Weg zu der Wärmepumpe (8) abgibt,
wobei die Wärmepumpe (8) mindestens Radiatoren (14) mit Warmwasser versorgt, die sich in den sauberen Räumen (2, 4, 6, 7) befinden, und eine Ableitung (10) mit gekühlter Abluft versorgt,
**dadurch gekennzeichnet, dass** Blenden (16, 19) angeordnet sind, um es der erwärmten Luft (15) aus den sauberen Räumen zu erlauben, über Korridore (18) oder andere Räume zu schmutzigen Räumen (3, 5) zu zirkulieren,
wobei die Radiatoren (14) vor den Öffnungen (12), die sich in der Außenwand (11) befinden, nahe dem Boden platziert sind, sodass die Frischluft (13) mindestens durch einen Abschnitt der Radiatoren (14) zu laufen hat, und
dass die Wärmepumpe (8) einen Heizer (27) für heißes Leitungswasser mit Warmwasser (26) zum Heizen des Wassers (28) versorgt.

2. Energiesystem nach Anspruch 1,
wobei sich ein Filter (30) zwischen der Öffnung (12) in der Außenwand (11) und dem Radiator (14) befindet.

3. Energiesystem nach Anspruch 1 oder 2,
wobei ein verstellbares Ventil (29) zwischen der Öffnung (12) in der Außenwand (11) und dem Radiator (14) angeordnet ist.

4. Energiesystem nach einem der Ansprüche 1-3,
wobei die Blenden Öffnungen (16, 19) oder Schlitze in oder entlang von Türen (17, 20) zu Räumen (4, 5) in der Wohnung (1) umfassen.

5. Energiesystem nach einem der vorstehenden Ansprüche,
wobei die Wärmepumpe (8) einen Kompressor (23) mit einer Größe in der Größenordnung von 6 kW aufweist.

6. Energiesystem nach einem der vorstehenden Ansprüche,
wobei die Wärmepumpe (8) ausgeführt ist, um die Abluft auf -15° C abzukühlen.

7. Energiesystem nach einem der vorstehenden Ansprüche,
wobei die Wärmepumpe (8) ausgeführt ist, um den Heizer (27) für heißes Leitungswasser auch im Sommer mit Wärme zu versorgen.

8. Energiesystem nach einem der vorstehenden Ansprüche,
wobei die Wärmepumpe zwei Rohrspulen (25, 26) umfasst, wobei eine der Spulen (25) Warmwasser zu den Radiatoren (14) zirkuliert, die andere Spule (26) Warmwasser zum Heizen des Wassers in dem Wasserheizer (27) für warmes Leitungswasser (28) zirkuliert.

## Revendications

1. Système énergétique complet pour la ventilation et le chauffage de logements (1), comprenant une pompe à chaleur d'échappement air / eau (8) faisant entrer de l'air frais (13) par des ouvertures traversantes (12) d'une paroi extérieure (11) dans des pièces propres tels que le salon (2) et la chambre à coucher (4), et en le faisant sortir à travers des pièces sales telles que salle de bain (5) et la cuisine (3) sous forme d'air chaud utilisé (24) sur le chemin de la pompe à chaleur (8),
dans lequel la pompe à chaleur (8) fournit de l'eau chaude au moins aux radiateurs (14) situés dans lesdites salles propres (2, 4, 6, 7) et fournit de l'air utilisé refroidi à une sortie (10),'
**caractérisé en ce que** des ouvertures (16, 19) sont agencées pour permettre à l'air chauffé (15) des pièces propres de circuler dans des couloirs (18) ou d'autres pièces vers des pièces sales (3,5),
**que** lesdits radiateurs (14) sont placés devant lesdites ouvertures (12) étant situés dans la paroi extérieure (11) près du sol de sorte que l'air frais (13) doit passer au moins par une partie des radiateurs (14), et
**que** la pompe à chaleur (8) fournit de l'eau chaude (26) pour chauffer l'eau (28) du robinet d'eau chaude du chauffe-eau (27).

2. Système énergétique selon la revendication 1,
dans lequel un filtre (30) est situé entre l'ouverture (12) dans la paroi extérieure (11) et le radiateur (14).

3. Système énergétique selon la revendication 1 ou 2,
dans lequel une vanne réglable (29) est agencée entre l'ouverture (12) dans la paroi extérieure (11) et le radiateur (14).

4. Système énergétique selon l'une des revendications 1 à 3,
dans lequel lesdites ouvertures comprennent des ouvertures (16, 19) ou des fentes dans ou le long des portes (17, 20) des chambres (4, 5) dans le logement (1).

5. Système énergétique selon l'une des revendications précédentes,
dans lequel la pompe à chaleur (8) comporte un compresseur (23) d'une taille de l'ordre de 6 kW.

6. Système énergétique selon l'une des revendications précédentes,
dans lequel la pompe à chaleur (8) est agencée pour refroidir l'air utilisé jusqu'à -15 ° C.

7. Système énergétique selon l'une des revendications précédentes,
dans lequel la pompe à chaleur (8) est agencée pour fournir de la chaleur au robinet d'eau chaude du chauffe-eau (27) également en été.

8. Système énergétique selon l'une des revendications précédentes,
dans lequel la pompe à chaleur comprend deux serpentins (25, 26), l'un des serpentins (25) faisant circuler de l'eau chaude vers les radiateurs (14), l'autre serpentin (26) faisant circuler de l'eau chaude pour chauffer l'eau dans le chauffe-eau (27) pour l'eau chaude du robinet (28).
